Europäisches Patentamt

European Patent Office

Office européen des brevets

(19)

(11) **EP 0 851 252 A1**

(12) **DEMANDE DE BREVET EUROPEEN**

(43) Date de publication:
01.07.1998 Bulletin 1998/27

(51) Int Cl.⁶: **G02B 6/293**, G02B 6/124

(21) Numéro de dépôt: 97403114.8

(22) Date de dépôt: 22.12.1997

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **23.12.1996 FR 9615855**

(71) Demandeur: **FRANCE TELECOM**
**75015 Paris (FR)**

(72) Inventeurs:
• **Bruno, Adrien**
**91120 Palaiseau (FR)**
• **Rigny, Arnaud**
**92220 Bagneux (FR)**

(74) Mandataire: **Martin, Jean-Jacques**
**Cabinet REGIMBEAU**
**26, Avenue Kléber**
**75116 Paris (FR)**

(54) **Muliplexeur et/ou démultiplexeur optique indépendant de la température**

(57) La présente invention concerne un dispositif formant multiplexeur et/ou démultiplexeur optique du type comprenant deux dioptres plans (10, 12) séparés par un réseau de guide (14) possédant des différences de longueur contrôlées, caractérisé par le fait que chaque guide (14) comprend au moins deux tronçons (140, 142) placés en série et possédant des longueurs et des indices de réfraction respectifs adaptés pour contrôler l'influence de variation de la température sur le dispositif.

# FIG.10

EP 0 851 252 A1

## Description

Le domaine technique de la présente invention est celui de l'optique guidée.

La présente invention propose un multiplexeur et/ou démultiplexeur optique utilisable dans le domaine des télécomunications et des capteurs en télémétrie.

Le dispositif selon l'invention peut constituer un récepteur optique de circuit de réception en détection directe, par exemple pour des systèmes de liaison optique. Un tel dispositif peut être intéressant pour la distribution, pour séparer un ensemble de signaux de longueur d'onde différente arrivant d'une même fibre, vers différents utilisateurs, chacun recevant sa propre longueur d'onde.

Le dispositif selon l'invention peut aussi être couplé (en hybride ou intégré) avec des lasers ou des ampli-optiques à l'émission.

Le dispositif selon l'invention est notamment intéressant dans des fonctions commutation, brasseurs et boucle locale. Il pourra être utilisé, également dans des interconnexions optiques entre, par exemple, des "puces" électroniques rapides à haut degré d'intégration ou entre ordinateurs ou à l'intérieur d'ordinateurs.

Différentes structures de multiplexeurs et/ou démultiplexeurs optiques ont été décrites dans la littérature.

On peut citer par exemple les documents suivants : [1] ECOC 96, Extremely compact 1.31$\mu$m-1.55$\mu$m phased aray duplexer on InP with -30dB crosstalk over 100nm ; R. Mestric et al., qui décrit la réalisation d'un démultiplexeur à deux longeurs d'onde 1.3$\mu$m et 1.55$\mu$m ; [2] ECOC 96, Compact low loss 8x10GHz polarisation independent WDM receiver C.A.M. Steenbergen et al. , qui décrit la réalisation d'un démultiplexeur intégré à des détecteurs et propose d'utiliser deux structures de guide pour régler le problème de la polarisation.

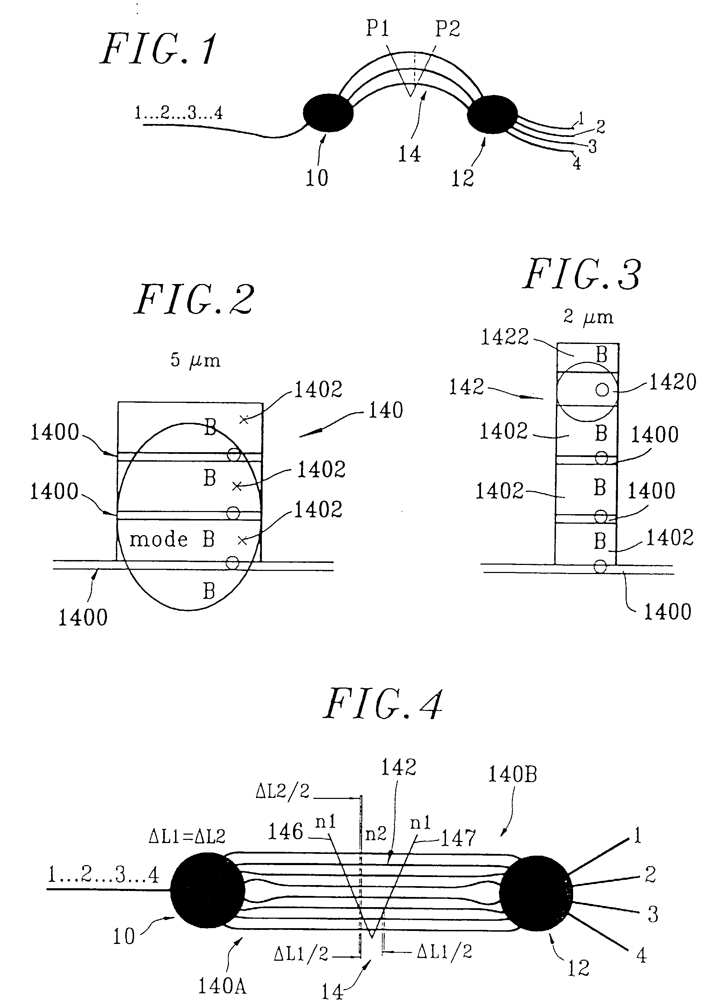

Les (dé)multiplexeurs généralement utilisés de nos jours sont du type à réseau de guides représenté sur la figure 1 annexée. Ces démultiplexeurs sont composés de deux dioptres plans 10, 12 séparés par un réseau 14 de guides. La différence de marche $\Delta L$ entre deux guides consécutifs 14 est constante et permet le déphasage et donc le démultiplexage. Sur la figure 1, P1 représente le plan équiphase pour un signal d'entrée tandis que P2 représente le plan équiphase pour un signal venant d'une des sorties.

Les dispositifs multiplexeurs/démultiplexeurs connus ainsi proposés ont déjà rendu de grands services. Cependant, ils ne donnent pas totalement satisfaction.

L'inconvénient principal de ces dispositifs connus est leur forte dépendance avec la température, intrinsèque au matériau utilisé.

En effet, l'indice du matériau varie en fonction de la température et ainsi la différence de marche entre deux guides consécutifs est modifiée avec la température et entraîne un déplacement des pics se décallant par rapport aux guides de sortie.

Le matériau SiO2 possède un faible coefficient de variation de l'indice avec la température (cette variation entraîne un décallage d'environ 1nm pour 100°C). Cependant, ce matériau est limité au niveau de l'intégration monolithique (sur le même matériau) de dispositifs tel que les lasers, les amplificateurs optiques ou les détecteurs.

En revanche, l'intégration monolithique permettant de réduire les coûts de production (par rapport à l'hybridation sur différents matériaux) est possible sur InP. Mais les variations de l'indice en fonction de la température pour l'InP sont considérables (cette variation induit un décallage d'environ 1nm pour 10°C). La publication [3] Polarisation independent 8x8 waveguide grating multiplexer on InP Electronics Letters, Jan. 21, 1993, vol. 29, n° 2 ; M. Zirngibl et al., donne une variation de 1,5nm/10°C. Cette forte dépendance exige un contrôle de la température à l'aide de moyens externes au dispositif, par exemple sous forme d'un élément à effet Peltier, augmentant les coûts de réalisation.

Bien entendu, dans le cas d'un démultiplexeur large raie avec un faible nombre de raies, tel que le duplexeur 2 raies de la référence [1] ECOC 96 avec des raies de 100nm, la température ne perturbe pas le démultiplexage ou très peu. Par contre, dans le cas d'une application multilongueur d'onde et des raies de 0.65nm, l'instabilité en température doit être contrôlée.

La présente invention a pour but de proposer un dispositif qui permet de réduire et/ou d'annuler l'effet de la température sur un dispositif de (dé)multiplexage sans aucune action extérieure au dispositif et quel que soit le matériau utilisé (SiO2, InP, polymère, Al2O3, LiNbO3 ...).

Accessoirement la présente invention a pour but de proposer un dispositif adapté soit pour réduire l'effet de la température, soit augmenter cet effet pour offrir un moyen de contrôle du signal, par la température sur le canal désiré. L'invention permet ainsi une plus grande tolérance sur la géométrie du dispositif.

L'annulation de l'effet de la température permet de s'affranchir d'un dispositif de régulation externe.

Les buts précités sont atteints dans le cadre de la présente invention grâce à un dispositif formant multiplexeur et/ou démultiplexeur optique du type comprenant deux zones non guidées latéralement agissant comme des lentilles dans le plan, séparées par un réseau de guides possédant des différences de longueur contrôlées, caractérisé par le fait que chaque guide comprend au moins deux tronçons placés en série et possédant des longueurs et des indices de réfraction respectifs adaptés pour contrôler l'influence de variations de la température sur le dispositif, c'est à dire pour contrôler la position de sortie des différentes longueurs d'onde du dispositif dépendant des fluctuations de température.

Selon un premier mode de réalisation conforme à la présente invention, les variations d'indice de réfraction avec la température évoluent dans le même sens pour les matériaux composant les deux tronçons de chaque guide respectif et chacun de ces deux tronçons possèdent des longueurs respectives qui évoluent en sens inverse, d'un guide à l'autre.

Selon un second mode de réalisation conforme à la présente invention, les variations d'indice de réfraction avec la température évoluent dans des sens opposés pour les matériaux composant les deux tronçons de chaque guide respectifs et chacun de ces deux tronçons possèdent des longueurs respectives qui évoluent dans le même sens, d'un guide à l'autre.

La présente invention propose ainsi un (dé)multiplexeur soit indépendant de la température, soit de dépendance (dλ/dT) choisie et désirée en fonction de la température.

D'autres caractéristiques, buts et avantages de l'invention apparaîtront à la lecture de la description détaillée qui va suivre, et en regard des dessins annexés, donnés à titre d'exemples non limitatifs et sur lesquels :

- la figure 1 précédemment décrite illustre schématiquement la structure générale d'un démultiplexeur conforme à l'état de la technique,
- les figures 2 et 3 représentent des vues en coupe verticale de deux tronçons de guide conformes à l'invention,
- les figures 4, 5 et 6 représentent des vues schématiques de dessus de trois variantes de structures de dispositif conformes à un mode de réalisation principal de l'invention,
- les figures 7, 8 et 9 représentent des vues schématiques de dessus de trois variantes de structure de dispositif conformes à un second mode de réalisation principal de l'invention,
- la figure 10 représente une vue schématique de dessus d'une variante de structure possédant une compensation additionnelle à la polarisation,
- les figures 11A et 11B illustrent schématiquement deux étapes de gravure pour l'obtention de tronçons avec adaptateur de mode conformes à la présente invention et les figures 11C et 11D représentent des vues en coupes verticales de la structure respectivement au niveau des second tronçon et premier tronçon, après la première gravure, tandis que les figures 11E et 11F représentent des vues similaires en coupes verticales respectivement au niveau des second tronçon et premier tronçon après la seconde gravure.

Comme indiqué précédemment, l'invention concerne les dispositifs formant multiplexeur et/ou démultiplexeur optique du type comprenant deux lentilles intégrées 10, 12 placées par exemple l'une devant un guide d'entrée et l'autre devant plusieurs guides de sortie, ou inversement l'une devant plusieurs guide d'entrée et l'autre devant un guide de sortie, lesdites lentilles intégrées 10, 12 étant en outre placées entre un réseau ou nappe de guides 14 présentant deux à deux des différences de marche ΔL contrôlées. L'invention propose plus précisément une structure permettant de contrôler l'influence de la température sur un tel dispositif.

L'invention repose sur l'analyse suivante.

L'équation donnant la longueur d'onde centrale d'un démultiplexeur de type PHASAR comprenant une série de guides optiques placés entre deux dioptres plans, est la suivante : $\lambda = n\Delta L/m$ dans laquelle n représente l'indice effectif du guide utilisé dans la nappe de guides 14, ΔL représente la différence de chemin optique entre deux guides consécutifs et m représente l'ordre d'interférence.

La variation de longueur d'onde en fonction de la température est donc par dérivation :

$$d\lambda/dT = (dn/dT)\Delta L/m$$

par conséquent directement reliée à la variation de l'indice en fonction de la température.

Afin de simplification, on suppose pour l'instant que le terme dn/dT contient aussi le terme de variation de la longueur; en fait $dn/dT \rightarrow (dn/dT) + (nd\Delta L/\Delta LdT)$.

Pour obtenir une indépendance (totale ou partielle) en température, le dispositif conforme à la présente invention possède au niveau de chaque guide au moins deux tronçons de guide placés en série et possédant des longueurs et des indices effectifs de réfraction respectifs adaptés.

Sur les figures et suivantes annexées, ces deux tronçons en série sont références 140, 142.

Plus précisément encore la présente invention propose deux modes de réalisation principaux.

Dans le premier mode de réalisation, les variations d'indice de réfraction avec la température évoluent dans le même sens pour les matériaux composant les deux tronçons 140, 142 de chaque guide 14 respectif, mais chacun de ces deux tronçons 140, 142 possèdent des longueurs respectives qui évoluent en sens inverse, d'un guide à l'autre.

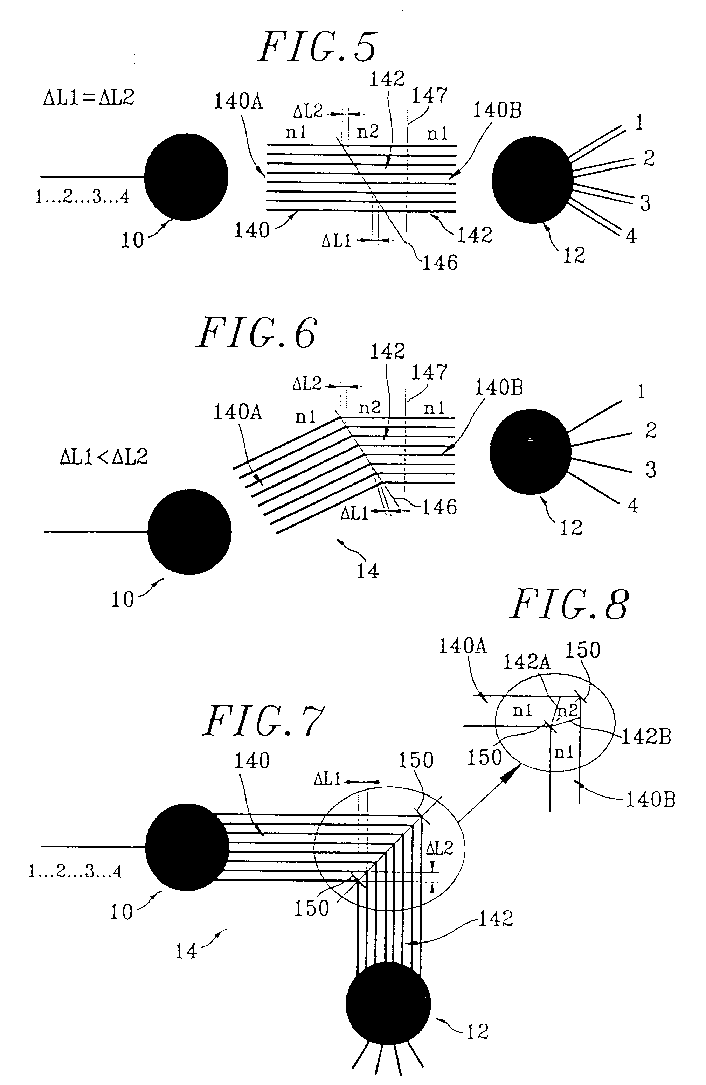

Les figures 4, 5 et 6 représentent trois variantes d'un tel dispositif.

L'équation donnant la longueur d'onde centrale λ en fonction de la différence de chemin entre deux guides consécutifs d'une telle structure est la suivante :

$$m\lambda = n1\Delta L1 - n2\Delta L2 \tag{1}$$

avec $\Delta L1 > 0$ différence de chemin entre deux guides consécutifs 14 pour le matériau d'indice n1 formant de premiers tronçons respectifs 140, et avec $\Delta L2 > 0$ différence de chemin entre deux guides consécutifs 14 pour le matériau d'indice n2 formant de seconds tronçons respectifs 142.

Le démultiplexeur est conçu tel que $\Delta L2 = K\Delta L1$ avec $k = (dn1/dT)/(dn2/dT) = K1/K2 > 0$ c'est-à-dire des variations d'indice de réfraction avec la température dans le même sens pour les deux matériaux composant les deux tronçons en série, si l'on veut annuler les effets de la température.

Par ailleurs, pour avoir $\Delta L1$ suffisamment petit pour un phasar de faible dimension, n1-Kn2 doit être suffisamment grand.

Dans le second mode de réalisation, les variations d'indice de réfraction avec la température évoluent dans des sens opposés pour les matériaux composant les deux tronçons 140, 142 de chaque guide 14 respectif et chacun de ces deux tronçons 140, 142 possède des longueurs respectives qui évoluent dans le même sens, d'un guide à l'autre.

Les figures 7, 8 et 9 représentent trois variantes d'un tel dispositif.

L'équation donnant la longueur d'onde centrale $\lambda$ en fonction de la différence de chemin entre deux guides consécutifs d'une telle structure est la suivante :

$$m\lambda = n1\Delta L1 + n2\Delta L2 \tag{2}$$

avec $\Delta L1 > 0$ différence de chemin entre deux guides consécutifs 14 pour le matériau d'indice n1 formant des premiers tronçons respectifs 140, et avec $\Delta L2 > 0$ différence de chemin entre deux guides consécutifs pour le matériau d'indice n2 formant les seconds tronçons respectifs 142.

Le démultiplexeur est alors conçu tel que $\Delta L2 = K\Delta L1$ avec $K = -(dn1/dT)/(dn2/dT) > 0$ c'est-à-dire des variations de l'indice de réfraction avec la température dans le sens opposé pour les deux matériaux composant les tronçons en série, si l'on veut annuler les effets de la température.

Dans ce cas, le facteur n1+Kn2 tiré de $m\lambda = (n1+Kn2)\Delta L1$ est suffisamment grand pour avoir $\Delta L1$ suffisamment petit permettant de réaliser un phasar de faible dimension.

La variation de la longueur d'onde pour les deux géométries précitées est la suivante :

a) de l'équation (1) on tire : $md\lambda/dT = (dn1/dT)\Delta L1 - (dn2/dT)\Delta L2$
b) de l'équation (2) on tire: $md\lambda/dT = (dn1/dT)\Delta L1 + (dn2/dT)\Delta L2$

Pour $\Delta L2 = K\Delta L1$, $md\lambda/dT = 0$.

Ainsi nous obtenons l'indépendance vis à vis de la température avec $\Delta L2 = K\Delta L1$.

Pour disposer d'une dépendance avec la température différente de celle donnée par les matériaux et déterminée au préalable, il suffit d'agir sur la géométrie du PHASAR en modifiant le rapport $\Delta L2/\Delta L1$ qui pourra être supérieur ou inférieur à K.

On va maintenant décrire des exemples conformes au premier mode de réalisation précité pour lequel les variations d'indice avec la température sont de même sens pour les deux matériaux composant respectivement les deux tronçons en série 140, 142 de chaque guide consécutif 14.

De l'équation (1) on déduit $m\lambda = (n1-Kn2)\Delta L1$.

Dans ces exemples les deux tronçons en série 140, 142 sont formés de structures sur substrat InP, composées de deux empilements de couches différentes pour réaliser les deux tronçons de guides. Ces deux structures sont illustrées respectivement sur les figures 2 et 3 annexées.

Plus précisément encore, selon un mode de réalisation particulier, le premier tronçon 140 est composé de trois fines couches 1400 (500Å) de quaternaire GaInAsP(gap de 1.3μm) séparées de couches 1402 d'InP d'une épaisseur de 0.55μm. Ce premier tronçon 140 est réalisé par gravure (voir figure 2) pour définir un ruban de largeur 5μm. Le second tronçon 142 est constitué d'un guide quaternaire 1420 GaInAsP (gap=1.3μm) surmonté d'une couche 1422 d'InP obtenu par gravure RIE de largeur 2μm. Le transfert du mode d'une structure de guide 140 à l'autre 142 se fait par un adaptateur de mode.

Un tel adaptateur de mode peut être par exemple conforme aux enseignements du document [4] FR-A-2732777 (demande de brevet français n° 95 04031).

L'indice effectif n1 de la première structure 140 est d'environ 3.19 et celui n2 de la seconde structure 142 est de 3.21. Les variations d'indice avec la température sont $K1 = 0.127$nm/°C pour la première structure 140 et pour la seconde structure 142, $K2 = 0.15$nm/°C. $K2 > K1$ puisque le gap 1.3μm de la structure 142 est plus proche de la longueur d'onde 1.54μm que ne l'est le gap équivalent de 0.919μm de la structure 140. On peut supposer qu'au premier ordre la variation d'indice effectif du mode guidé avec T est équivalente à celle du matériau de coeur de guide. Ainsi n1-Kn2=0.47. Pour une longueur d'onde de 1.54μm avec une largeur de fenêtre autour de cette valeur d'environ 30nm, l'ordre m est de 1540/30=50. Nous obtenons pour ΔL1 une valeur de 164μm. Ceci représente une longueur minimale pour la nappe de 40 guides de 164x40=6560μm.

On notera que selon l'illustration schématique des figures 2 et 3, la seconde structure 142 formée des couches 1420, 1422 est réalisée au-dessus de la première structure composée des couches 1400 et 1402.

On va maintenant décrire un procédé particulier de réalisation de ces structures, et notamment leurs adaptateurs de mode.

L'adaptateur de mode permettant le passage sans pertes d'énergie d'un guide à l'autre est réalisé grâce à deux masques :

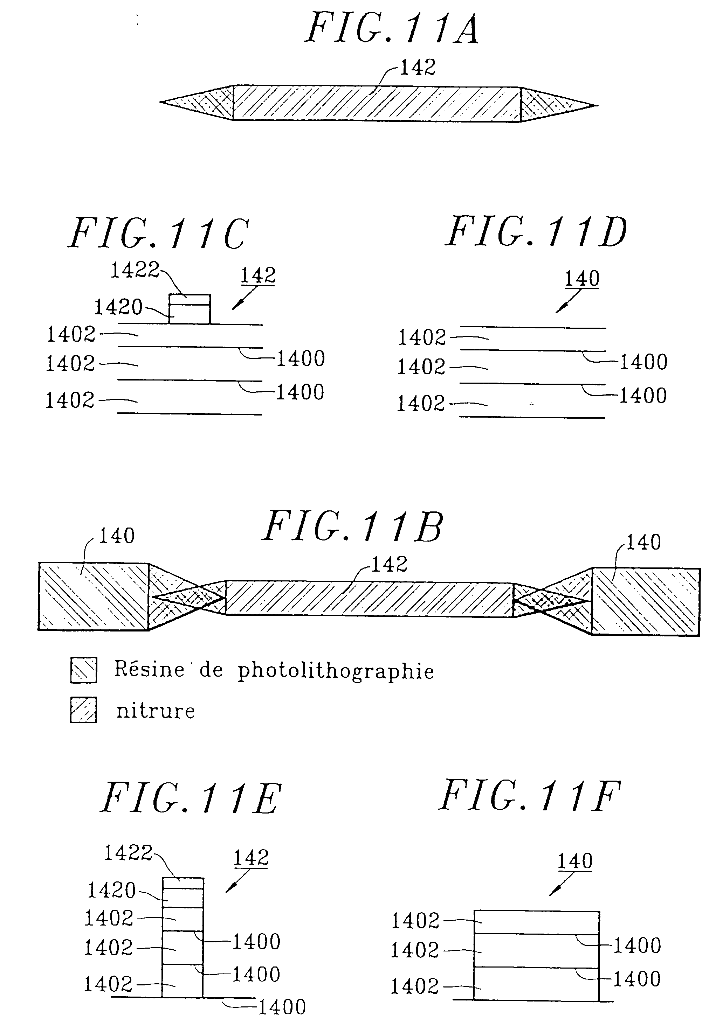

- un premier masque permet la réalisation du ruban 142 de 2μm de largeur avec deux pointes à chaque extrémité comme illustré sur les figures 11A, 11C et 11D, par une gravure des couches supérieures InP 1422 et GaInAsP 1420 au dessus de la structure tricouche 1400 et 1402, sur les zones destinées à former le ruban 142 (voir figure 11C) et élimination complète des couches InP 1422 et GaInAsP 1420 en dehors des zones précitées, y compris sur les zones destinées à former le tronçon 140 (voir figure 11D).
- un deuxième masque : le SiNx du 1er ruban 142 est conservé et le protège pour la deuxième gravure assurant la réalisation du tronçon 140 tout en terminant le tronçon 142 par gravure de la structure tricouche (voir figures 11E et 11F).

Sur les figures 11A et 11B, on a illustré la configuration avant retrait de la résine et du nitrure, respectivement après la première photolithographie et après la deuxième photolithographie. Les figures 11C et 11D représentent des vues en coupes verticales de la structure respectivement au niveau des second tronçon 142 et premier tronçon 140, après la première gravure, et les figures 11E et 11F représentent des vues similaires en coupes verticales respectivement au niveau des second tronçon 142 et premier tronçon 140 après la seconde gravure.

Pour la définition du deuxième ruban 140 de 5μm de large, il n'est pas prévu de protection de la résine du ruban 142 pour faciliter l'alignement avec le premier ruban 142. C'est ainsi que l'on aura réalisé au préalable un premier nitrure suffisamment épais pour protéger le ruban 142 puisqu'une partie de celui-ci sera gravée après la deuxième photolithographie.

Les figures 4, 5 et 6 représentent deux cas conformes au premier mode de réalisation de la présente invention : le cas où K=1 (ΔL1=ΔL2) avec deux types de triangle délimitant la zone des seconds tronçons 142 et permettant le déphasage (figures 4 et 5) et le cas où K#1 (figure 6).

Selon les trois variantes illustrées sur les figures 4, 5, 6 les guides 14 sont formés de segments sensiblement rectilignes entre les lentilles 10, 12.

Chacun des premiers tronçons 140 d'un guide 14 est lui-même scindé en deux segments 140A, 140B qui encadrent un second tronçon 142.

Selon les figures 4 et 5, les segments 140A et 140B et le tronçon 142 sont sensiblement alignés.

En revanche, selon la figure 6, le tronçon 142 et le segment 140B sont sensiblement alignés tandis que le segment 140A est disposé en oblique, incliné par rapport à ceux-ci.

Les zones de raccordement entre le second tronçon 142 et respectivement chacun des segments 140A, 140B sont référencées 146, 147.

Les variations de longueur des seconds tronçons 142 évoluant en sens inverse de la somme des longueurs des segments 140A, 140B, d'un guide à l'autre, et ce avec des pas constants d'un guide donné au suivant, la zone délimitée par l'ensemble des seconds tronçons 142 entre les deux segments respectifs 140A, 140B est de forme générale triangulaire.

Plus précisément, cette zone est en forme de triangle isocèle selon la figure 4, le plan médian de symétrie des seconds tronçons 142 étant perpendiculaire à la direction générale des guides et les zones de raccordement étant symétriques par rapport à un plan orthogonal à cette direction.

En revanche, la zone des seconds tronçons 142 est en forme de triangle rectangle selon la figure 5, la zone de raccordement 146 étant inclinée sur la direction générale des guides tandis que la zone de raccordement 147 est orthogonale à cette direction générale.

Bien entendu des variantes intermédiaires de ces deux dispositions particulières illustrées sur les figures 4 et 5 peuvent être retenues, en respectant ΔL1=ΔL2.

L'homme de l'art comprendra aisément à l'examen de la figure 6 que la variante illustrée sur cette figure permet d'obtenir ΔL1<ΔL2. C'est-à-dire que la variation de longueur ΔL2 des seconds tronçons 142, d'un guide 14 à l'autre, évoluent toujours en sens inverse mais avec une amplitude différente de la variation ΔL1 de la somme des longueurs des segments 140A, 140B. L'angle entre la direction des segments de guide 140A, en sortie du premier dioptre plan 10 et la direction des segments de guide 140B en entrée du second dioptre plan 12 détermine directement le rapport

$\Delta$L1/$\Delta$L2.

Il est à noter que bien que les dispositifs sont longs (environ lmm), ils sont formés de guide de très faible courbure. Ces guides ainsi permettent de réduire les pertes de propagation par rapport à une structure à guide incurvé classique du PHASAR dépendant de la température. Pour faciliter la compréhension des droites plutôt que des courbes sont représentées sur les figures annexées. En réalité, une courbure et un adaptateur de mode s'imposent pour réduire les pertes de raccordement, entre les structures d'indice n1 et n2, c'est-à-dire entre les segments 140A, 140B et les seconds tronçons 142.

Par ailleurs sur les trois schémas des figures 4, 5 et 6, la jonction entre les guides 14 de la nappe et chaque dioptre plan 10, 12 représenté par un disque, n'est pas représentée dans le détail pour éviter d'alourdir les figures.

Cette jonction est schématisée sur la figure 4 et omise sur les figures 5 et 6 pour faire mieux apparaitre la structure des segments 140A, 140B et des seconds tronçons 142.

On va maintenant décrire des exemples conformes au second mode de réalisation de l'invention pour lequel les variations d'indice avec la température sont de sens opposés pour les deux matériaux composant respectivement les deux tronçons en série 140, 142 de chaque guide 14, en regard des figures 7, 8 et 9.

De l'équation 2, on déduit : m$\lambda$=(n1+Kn2)$\Delta$L1.

Dans ce cas les deux tronçons 140, 142 peuvent être formés par un couplage bout à bout entre un guide 140 composé de semi-conducteur, par exemple d'InP et une résine 142 de polymère, par exemple de type PMMA.

La variation de l'indice avec la température est positive pour l'InP et négative pour le PMMA.

Pour la partie 140 InP, on peut choisir le guide de la structure décrite précédemment en regard de la figure 2.

Le guide 142 en PMMA peut être conforme aux enseignements du document [5] Integration of a Laser Diode with a Polymer-Based Waveguide for Photonic Integrated Circuits N. Bonadma et al., IEEE Photonics Technology Letters, Vol. 6, n° 10, Oct. 1994.

L'indice effectif n1 de la première structure 140 est d'environ 3.18, celui n° 2 de la seconde structure 142 de 1.5 environ. Les variations d'indice avec la température sont équivalentes mais opposées d'où K=1 (K choisi toujours positif). L'équation s'écrit : m$\lambda$=(n1+n2)$\Delta$L1. Pour une longueur d'onde de 1.54µm, avec une largeur de fenêtre autour de cette valeur d'environ 30nm, l'ordre m devra être de 1540/30=50. Avec une somme d'indice de 4.68, nous obtenons pour $\Delta$L1 une valeur de 16.4µm.

On a illustré sur les figures 7, 8 et 9 trois géométries de PHASAR répondant au second mode de réalisation, en accord avec la différence de marche (n1+n2) $\Delta$L1.

On a schématisé sur la figure 7 une géométrie dans laquelle les deux tronçons 140, 142 sont formés de guides rectilignes orthogonaux entre eux et d'écart constant entre guides adjacents, raccordés respectivement aux dioptres plans 10, 12, d'une part et raccordés d'autre part entre eux grâce à des miroirs 150 à 45°. On comprend que $\Delta$L1=$\Delta$L2 si l'écartement entre les guides 140 est identique à celui des guides 142. L'angle entre les deux tronçons 140 et 142 (qui peut être différent de 90°) et l'écart ou entre-axe entre les tronçons 140, 142 déterminent directement la valeur de $\Delta$L1 et $\Delta$L2 et permettent d'obtenir $\Delta$L1$\neq$$\Delta$L2. Cependant une telle structure avec miroir à 45° pour assurer le couplage entre deux tronçons de guide 140, 142 de natures différentes est difficile à réaliser et à exploiter.

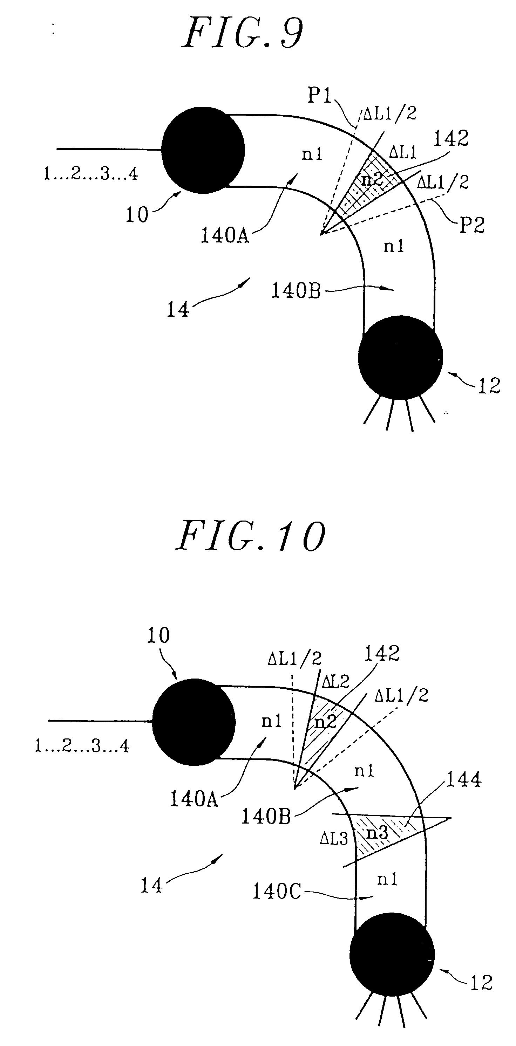

On préfère en effet, comme illustré sur les figures 8 et 9, opérer le raccordement entre les tronçons 140, 142 sur des parties de guide sensiblement rectilignes.

Ainsi selon les figures 8 et 9 chaque second tronçon 142 est la encore placé entre deux segments 140A, 140B du premier tronçon 140.

Plus précisément, selon la figure 8, chaque second tronçon 142 est lui-même scindé en deux segments rectilignes orthogonaux entre eux 142A, 142B. Ces seconds segments 142A, 142B sont couplés entre eux par un miroir à 45°. Ils sont par ailleurs couplés à un premier segment 140A, 140B respectif aligné. Les miroirs 150 assurent ainsi le couplage entre deux segments de même nature 142A, 142B.

La figure 9 correspond à une configuration de guide avec des virages classiques en soi.

Les miroirs 150 peuvent par exemple être réalisés selon l'enseignement du document [6] FR-A-2725040 (demande de brevet français n° 94 11369).

Sur la figure 9, le plan équiphase en partant de l'entrée est référencé P1, celui en partant de la sortie est référencé P2.

Dans la description qui précède, la dépendance à la polarisation a été ignorée.

Cependant, dans le cadre du (dé)multiplexeur indépendant de la température, conforme à l'invention, l'indépendance à la polarisation peut également être réglée de la même façon que pour un phasar classique.

Pour cela, on peut citer au moins trois méthodes :

- travailler à un ordre différent pour le TE et pour le TM. Cette méthode réduit la taille de la fenêtre en longueur d'onde et limite le nombre de canaux.

- utiliser un guide de structure carré pour un indice TE et TM identique. Dans le cas de l'invention, la biréfringence du tronçon 140 de guide doit être égale à celle du tronçon 142 de guide. Pour les phasars classiques de la littérature un seul guide nonbiréfringent est utilisé. Cette méthode est très peu tolérante au niveau de la géométrie induisant des difficultés de fabrication.

- utiliser un tronçon de guide additionnel sur chaque guide 14, pour compenser les différences de polarisation.

Cette méthode pourra être inspirée des enseignements du document [7] Démultiplexeur Intégré sur InP indépendant de la polarisation A. Rigny et al. JNOG 96, lui-même basé sur le document [4] FR-A-2732777.

Dans ce cas chaque guide 14 comprend au moins deux tronçons 140, 142 assurant un contrôle des effets de la température et au moins un troisième tronçon 144 en série sur chaque guide d'une longueur variable d'un guide à l'autre par pas constant $\Delta L3$, assurant une compensation de la polarisation, comme schématisé sur la figure 10.

Plus précisément encore selon cette figure 10, chaque premier tronçon 140 est scindé en trois segments 140A, 140B, 140C qui encadrent deux à deux respectivement un second tronçon 142 et un troisième tronçon 144,

Là encore, le plan équiphase en partant de l'entrée est référencé P1 tandis que le plan équiphase en partant de la sortie est référencé P2.

Pour déterminer les variations de longueurs $\Delta L1$, $\Delta L2$, $\Delta L3$ entre les tronçons concernés 140, 142, 144, d'un guide à l'autre, il suffit de résoudre le système de trois équations à trois inconnues suivant :

$m\lambda = n1.\Delta L1 + n2.\Delta L2 + n3.\Delta L3$
$m.d\lambda/dT = 0 = dn1/dT.\Delta L1 + dn2/dT.\Delta L2 + dn3/dT\Delta L3$ ou $K1\Delta L1 + K2\Delta L2 + K3\Delta L3$
$m.\Delta\lambda = 0 = \Delta n1.\Delta L1 + \Delta n2.\Delta L2 + \Delta n3.\Delta L3$

$\Delta n$ représentant la différence des indices pour les modes TE et TM
soit une équation qui rend compte de la différence des chemins, une équations qui tient compte de la température et enfin une dernière qui règle le problème de la polarisation.

Le tronçon i, avec i = 1, 2, 3, est caractérisé par son indice ni, sa différence d'indice (biréfringence) entre deux polarisations $\Delta ni$ et son coefficient thermique Ki faisant intervenir à la fois la variation de l'indice avec la température et la variation de longueur.

$d\lambda/dT = Cte$, cette constante peut être choisie nulle si l'on ne veut pas d'action de la température sur les longueurs d'onde.

Dans la résolution du système, des $\Delta L$ peuvent être négatifs. Un exemple est donné par la figure 10 : $\Delta L3$ est de signe opposé à $\Delta L1$ puisqu'elle va en décroissant vers l'extérieur du virage.

La précision du système précité peut être encore améliorée en faisant intervenir la variation de la longueur des tronçons de guide en fonction de la température.

Cette variation est donnée dans le document ECOC 96 (3.144) température indépendant narrow band filter by athermal waveguide, Yasuo Kokuburn et al. :

$$dS/dT = n.L\alpha_{sub} + L\, dn/dT$$

avec $S = n.L$ la longueur de la différence de chemin
avec $\alpha_{sub}$ le coefficient thermique d'expension du substrat et n l'indice effectif du guide.

Dans ce cas, le système d'équation précité, s'écrit :

$m\lambda = n1.\Delta L1 + n2.\Delta L2 + n3.\Delta L3$
$md\lambda/dT = 0 = dS1/dT + dS2/dT + dS3/dT$
$m.\Delta\lambda = 0 = \Delta n1.\Delta L1 + \Delta n2.\Delta L2 + \Delta n3.\Delta L3$

La deuxième équation se s'implifie ainsi :

$$0 = (dn1/dT + n1.\alpha_{sub}).\Delta L1 + (dn2/dT + n2.\alpha_{sub}).\Delta L2 + (dn3/dT + n3.\alpha_{sub}).\Delta L3 = = K1.\Delta L1 + K2.\Delta L2 + K3.\Delta L3$$

Pour les variantes faisant intervenir uniquement des matériaux semi-conducteurs (premier mode de réalisation notament), les valeurs K1 et K2 sont des données expérimentales et contiennent à la fois la variation de l'indice et la variation de la longueur avec la température.

Pour les cas faisant intervenir des polymères, les équations se résolvent de la même façon mais en prenant un K1 négatif (ou nul si la variation de la longueur du substrat compense celle de l'indice du guide, voir publication de Kokuburn ECOC96).

En conclusion, l'utilisation de trois matériaux et/ou structures de guide différents telle que proposée dans le cadre de l'invention permet de régler les problèmes de température et de dépendance à la polarisation dans un (dé)multiplexeur de type PHASAR.

Bien entendu, la présente invention n'est pas limitée aux modes de réalisation précédemment décrits, mais s'étend à toute variante conforme à son esprit.

**Revendications**

1. Dispositif formant multiplexeur et/ou démultiplexeur optique du type comprenant deux zones non guidées latéralement agissant comme des lentilles dans le plan (10, 12) séparées par un réseau de guide (14) possédant des différences de longueur contrôlées, caractérisé par le fait que chaque guide (14) comprend au moins deux tronçons (140, 142) placés en série et possédant des longueurs et des indices de réfraction respectifs adaptés pour contrôler la position de sortie des différentes longueurs d'onde du dispositif dépendant des fluctuations de température.

2. Dispositif selon la revendication 1, caractérisé par le fait que les variations d'indices de réfraction avec la température évoluent dans le même sens pour les matériaux composants les deux tronçons (140, 142) de chaque guide respectif (14) et chacun de ces deux tronçons (140, 142) possèdent des longueurs respectives qui évoluent en sens inverse d'un guide (14) à l'autre.

3. Dispositif selon la revendication 1, caractérisé par le fait que les variations d'indice de réfraction avec la température évoluent dans des sens opposés pour les matériaux composants les deux tronçons (140, 142) de chaque guide respectif (14) et chacun de ces deux tronçons possède des longueurs respectives qui évoluent dans le même sens, d'un guide (14) à l'autre.

4. Dispositif selon l'une des revendications 1 à 3, caractérisé par le fait que les longueurs et indices de réfraction respectifs des deux tronçons (140, 142) sont adaptés pour annuler les effets de la température sur les positions des longueurs d'onde de sortie.

5. Dispositif selon l'une des revendications 1 à 4, caractérisé par le fait que chaque guide (14) comprend en outre au moins un troisième tronçon (144) adapté pour obtenir l'indépendance vis à vis de la polarisation.

6. Dispositif selon l'une des revendications 1, 2, 4 et 5, caractérisé par le fait que les variations de longueurs $\Delta L1$ et $\Delta L2$ des deux tronçons (140, 142), d'un guide (14) à l'autre, et les indices n1 et n2 correspondant sont adaptés pour respecter les relations :

$$\Delta L2 = K \Delta L1$$

$$K = (dn1/dT)/(dn2/dT),$$

pour annuler les effets de la température.

7. Dispositif selon l'une des revendications 1, 2 ou 5, caractérisé par le fait que les variations de longueurs $\Delta L1$ et $\Delta L2$ des tronçons (140, 142) d'un guide (14) à l'autre et les indices n1, n2 correspondant sont adaptés pour respecter les relations :
$\Delta L2 = K \Delta L1$
$K \neq (dn1/dT)/(dn2/dT)$.

8. Dispositif selon l'une des revendications 1, 3, 4 et 5, caractérisé par le fait que les variations de longueur $\Delta L1$ et $\Delta L2$ des deux tronçons (140, 142) d'un guide (14) à l'autre et les indices n1, n2 correspondant répondent aux relations suivantes :
$\Delta L2 = K \Delta L1$
$K = -(dn1/dT)/(dn2/dT),$
pour annuler les effets de la température.

**9.** Dispositif selon l'une des revendications 1, 3 et 5, caractérisé par le fait que les variations de longueur $\Delta L1$ et $\Delta L2$ des deux tronçons (140, 142) et les indices n1, n2 correspondant répondent aux relations : $\Delta L2 = K\Delta L1$ $K \neq -(dn1/dT)/(dn2/dT)$.

**10.** Dispositif selon l'une des revendications 1 ou 2, caractérisé par le fait que l'un des tronçons (140) est formé de plusieurs couches de quaternaire, par exemple GaInAsP, séparées par des couches binaires par exemple d'InP, tandis que le second tronçon (42) est formé d'un guide de quaternaire, par exemple GaInAsP.

**11.** Dispositif selon l'une des revendications 1 à 10, caractérisé par le fait qu'il est prévu des adaptateurs de mode entre les tronçons (140, 142).

**12.** Dispositif selon l'une des revendications 10 ou 11, caractérisé par le fait que les adaptateurs de mode permettant le passage sans perte d'énergie d'un tronçon à l'autre sont réalisés grâce à deux masques :

-   un premier masque permettant la réalisation d'un ruban (142) avec deux pointes à chaque extrémité, et
-   un deuxième masque pour lequel la protection recouvrant le ruban précité est conservé afin de le protéger au cours d'une deuxième gravure assurant la réalisation de l'autre tronçon.

**13.** Dispositif selon l'une des revendications 1 à 12, caractérisé par le fait que l'un au moins des tronçons (140) est scindé en deux segments.

**14.** Dispositif selon l'une des revendications 1 à 13, caractérisé par le fait que l'ensemble de l'un au moins des tronçons (142) définit une zone de géométrie triangulaire.

**15.** Dispositif selon l'une des revendications 1 à 14, caractérisé par le fait que les tronçons (140 à 142, 140B) sont rectilignes et alignés.

**16.** Dispositif selon l'une des revendications 1 à 14, caractérisé par le fait que les tronçons (140, 142) comprennent des segments rectilignes et obliques entre eux, l'angle d'inclinaison entre ces segments déterminant l'écart de longueur d'un guide à l'autre.

**17.** Dispositif selon l'une des revendications 1 et 3, caractérisé par le fait que l'un des tronçons (142) est réalisé à base de polymère tandis que l'autre tronçon (140) est réalisé à base de semi-conducteur.

**18.** Dispositif selon la revendication 17, caractérisé par le fait que l'un des tronçons (142) est réalisé à base de PMMA.

**19.** Dispositif selon l'une des revendications 17 ou 18, caractérisé par le fait que l'autre tronçon (142) est réalisé à base de plusieurs couches de quaternaire, par exemple GaInAsP, séparées par des couches de binaires, par exemple InP.

**20.** Dispositif selon l'une des revendications 1, 3 et 17 à 19, caractérisé par le fait que chaque tronçon (140, 142) est scindé en deux segments deux segments (142A, 142B) d'un tronçon étant obliques entre eux et couplés par un miroir de renvoi (150), ces deux segments (142A, 142B) étant en outre couplés respectivement aux deux segments (140A, 140B) de l'autre tronçon (140).

**21.** Dispositif selon l'une des revendications 1, 3 et 17 à 20, caractérisé par le fait que les tronçons (140, 142) présentent des virages.

**22.** Dispositif selon la revendication 5, caractérisé par le fait que l'un au moins des tronçons (140) est scindé en trois segments (140A, 140B et 140C) qui encadrent deux à deux des seconds tronçons (142) et troisième tronçon (144) adaptés pour contrôler les effets de la température et compenser la polarisation.

## FIG.1

P1    P2

1...2...3...4

10    14    12

1
2
3
4

## FIG.2

5 μm

1402
140
1400
B
1402
B
1400
1402
mode B
1402
B
1400
B

## FIG.3

2 μm

1422
142
1420
1402    1400
B
1402    1400
B
1402
B
1400

## FIG.4

ΔL2/2
142
140B
146    n1    n2    n1    147
ΔL1=ΔL2

1...2...3...4

10
140A
ΔL1/2    14    ΔL1/2

1
2
3
4
12

*FIG.5*

$\Delta L1 = \Delta L2$

*FIG.6*

$\Delta L1 < \Delta L2$

*FIG.8*

*FIG.7*

# FIG.9

# FIG.10

## FIG.11A

142

## FIG.11C

1422
1420
142

1402
1402
1402

1400
1400

## FIG.11D

140

1402
1402
1402

1400
1400

## FIG.11B

140
142
140

▨ Résine de photolithographie

▨ nitrure

## FIG.11E

1422
1420
1402
1402
1402
142
1400
1400
1400

## FIG.11F

140

1402
1402
1402
1400
1400

# EP 0 851 252 A1

Office européen
des brevets

**RAPPORT DE RECHERCHE EUROPEENNE**

Numéro de la demande

EP 97 40 3114

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 662 621 A (SIEMENS AG) 12 juillet 1995<br>* colonne 5, ligne 33 - ligne 58 *<br>* colonne 6, ligne 1 - ligne 58 *<br>* colonne 7, ligne 12 - ligne 58 *<br>* colonne 8, ligne 1 - ligne 57 *<br>* figures *<br>--- | 1,13,14, 18,21 | G02B6/293<br>G02B6/124 |
| A | PATENT ABSTRACTS OF JAPAN<br>vol. 018, no. 146 (P-1707), 10 mars 1994<br>& JP 05 323246 A (NIPPON TELEGR & TELEPH CORP), 7 décembre 1993,<br>* abrégé *<br>--- | 1,13 | |
| A,D | RIGNY A ET AL: "TAPER-ASSISTED POLARISATION COMPENSATION IN EFFICIENTLY FIBRE-COUPLED INP DEMULTIPLEXER"<br>ELECTRONICS LETTERS.,<br>vol. 32, no. 20, 26 septembre 1996, ENAGE GB,<br>pages 1885/1886-1886, XP000637889<br>* le document en entier *<br>--- | 1,5,10, 11,13,14 | |
| A,D | FR 2 732 777 A (BRUNO ADRIEN) 11 octobre 1996<br>* page 3, ligne 13 - ligne 35 *<br>* page 4, ligne 1 - ligne 32 *<br>* page 5, ligne 13 - ligne 35 *<br>--- | 1,5, 10-13,19 | **DOMAINES TECHNIQUES RECHERCHES (Int.Cl.6)**<br>G02B |
| A | BISSESSUR H ET AL: "EXTREMELY SMALL POLARIZATION INDEPENDENT PHASED-ARRAY DEMULTIPLEXERS ON INP"<br>IEEE PHOTONICS TECHNOLOGY LETTERS,<br>vol. 8, no. 4, 1 avril 1996,<br>pages 554-556, XP000587021<br>* le document en entier *<br>----- | 1,5,19 | |

Le présent rapport a été établi pour toutes les revendications

| Lieu de la recherche | Date d'achèvement de la recherche | Examinateur |
|---|---|---|
| LA HAYE | 23 mars 1998 | Mathyssek, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)